# EUROPÄISCHE PATENTSCHRIFT

(11) **EP 1 602 531 B1**
(45) Veröffentlichungstag und Bekanntmachung des Hinweises auf die Patenterteilung: **03.08.2011**
(21) Anmeldenummer: 05010324.1
(22) Anmeldetag: 12.05.2005
(51) Int. Cl.: B60R 1/06, B60R 1/12, B60Q 1/26, B60R 1/02, B60R 1/04, B60R 1/08

(54) **Rückspiegel für ein Kraftfahrzeug**
Rearview mirror for a motor vehicle
Rétroviseur pour véhicule automobile

(30) Priorität: 03.06.2004 DE 202004008856 U
(43) Veröffentlichungstag der Anmeldung: 07.12.2005
(73) Patentinhaber: Magna Mirrors Holding GmbH, 63877 Sailauf (DE)
(72) Erfinder: Lüftner, Robert, 97904 Dorfprozelten (DE)
(74) Vertreter: von den Steinen, Axel

(56) Entgegenhaltungen:
- EP-A2- 1 022 190
- WO-A1-00/30893
- DE-A1- 10 215 854
- US-A- 5 285 060
- US-A- 5 788 357
- US-A1- 2003 193 814

## Beschreibung

Die Erfindung betrifft einen Rückspiegel für ein Kraftfahrzeug nach dem Oberbegriff des Anspruchs 1.

Gattungsgemäße Rückspiegel dienen einerseits der Beobachtung des nachfolgenden Verkehrs und andererseits als Signalisierungseinrichtung, um dem Fahrer und/oder anderen Fahrzeuginsassen und/oder anderen Verkehrsteilnehmern Warnsignale oder Hinweissignale zu geben. Die Signalübermittlung erfolgt dabei durch Aussendung von Lichtsignalen, wobei dazu Licht emittierende Leuchtmittel hinter dem zur Beobachtung des nachfolgenden Verkehrs dienenden Spiegelelement angeordnet sind.

Damit die Lichtsignale der Signalisierungseinrichtung vom Betrachter aus an der Vorderseite des Spiegelelements wahrgenommen werden können, ist das Spiegelelement teiltransparent ausgebildet. Derartige teiltransparente Spiegelelemente werden auch als sogenannte venezianische Spiegel bezeichnet.

Bei dem in der US 6,045,243 beschriebenen Rückspiegel ist zwischen dem Leuchtmittel und dem Spiegelelement eine Polarisierungsfolie angeordnet, mit der das vom Leuchtmittel abgestrahlte Licht in eine Vorzugsrichtung abgelenkt werden kann. Dadurch wird erreicht, dass bei Betrachtung der Vorderseite des Spiegelelements die Beleuchtungsstärke bei eingeschalteter Signalisierungseinrichtung vom Betrachtungswinkel relativ zur Vorzugsrichtung abhängt. Soll dem Fahrer beispielsweise ein Warnhinweis signalisiert werden, so wird eine Vorzugsrichtung gewählt, bei der die Signalisierungseinrichtung allein aus der Fahrerposition deutlich wahrgenommen werden kann. Aus der Blickrichtung des nachfolgenden oder seitlichen Verkehrs kann das Warnsignal dagegen nicht wahrgenommen werden, da das vom Leuchtmittel emittierte Licht in dieser Richtung von der Polarisierungsfolie abgeschattet wird.

Nachteilig an dem in der US 6,045,243 beschriebenen Spiegel ist es, dass die Polarisierungsfolie das Licht insgesamt abschwächt, so dass eine relativ hohe Leuchtdichte erforderlich ist, um eine ausreichende Beleuchtungsstärke an der Vorderseite des Spiegelelements zu gewährleisten. Diese hohe Lichtleistung wiederum erfordert eine relativ hohe elektrische Versorgungsleistung und verursacht hohe Wärmeverluste.

Die WO 00/30893 A1 beschreibt einen gattungsgemäβen Außenspiegel mit hinter dem Spiegel als Element angeordneten Leuchtdioden. Um das von den Leuchtdioden abgegebene Licht in eine Vorzugsrichtung zu lenken sind die Leuchten jeweils in einem in die Vorzugsrichtung verlaufenden Tunnel 32 aufgenommen. Zum Schutz der Leuchtdioden sind außerdem am offenen Ende der Tunnel jeweils Lampengläsert und Sammel linsen vorgesehen.

Die US 5,788,357 beschreibt einen Außenspiegel, bei dem Leuchtdioden als Signalisierungseinrichtung vorgesehen sind. Zur Ablenkung des von den Leuchtdioden abgegebenen Lichts sind Lichtleitelemente vorgesehen.

Die EP 1 022 190 A2 beschreibt das Spiegelglas eines Rückspiegels hinter dem eine Leuchtdiode als Signalisierungseinrichtung angeordnet ist. Gemäß einer bevorzugten Ausführungsform ist vor der Leuchtdiode dabei eine Linse angeordnet.

Die US 5,285,060 A beschreibt eine elektronische Schaltung für einen Innenrückspiegel, die ein Anzeigeelement hinter dem Spiegel des Innenrückspiegels ansteuert. Abhängig vom Leuchtestärkesignal eines Sensors wird die Beleuchtungsstärke des Displays verändert.

Ausgehend von diesem Stand der Technik ist es deshalb Aufgabe der vorliegenden Erfindung, einen neuen Rückspiegel mit richtungsabhängig abstrahlender Signalisierungseinrichtung vorzuschlagen, der eine zielgerichtete Abstrahlung von Warn- und Hinweissignalen unter den verschiedensten Einsatzbedingungen ermöglicht.

Diese Aufgabe wird durch einen Rückspiegel nach der Lehre des Anspruchs 1 gelöst.

Vorteilhafte Ausführungsformen der Erfindung sind Gegenstand der Unteransprüche.

Der Rückspiegel beruht auf dem Grundgedanken, zur Ablenkung des vom Leuchtmittel emittierten Lichts eine Sammellinse zu verwenden. Durch geeignete Formgebung der Sammellinse bzw. durch geeignete Relativanordnung zwischen Sammellinse und Leuchtmittel kann in sehr einfacher Weise erreicht werden, dass das vom Leuchtmittel emittierte Licht gebündelt und in eine Vorzugsrichtung abgelenkt wird. Sammellinsen haben dabei den entscheidenden Vorteil, dass nur ein sehr geringer Anteil der Lichtleistung beim Durchtritt durch die Sammellinse verloren geht. Somit kann zur Erreichung einer vorgegebenen Beleuchtungsstärke mit einer geringeren elektrischen Versorgungsleistung gearbeitet werden, wodurch insbesondere auch die Wärmeverluste geringer ausfallen.

Erfindungsgemäß werden Sammellinsen verwendet, die rotationssymmetrisch zu einer optischen Mittelachse gestaltet sind. Um die gewünschte Ablenkung des emittierten Lichts in Vorzugsrichtung zu erreichen, können derartige rotationssymmetrisch gestaltete Sammellinsen relativ zum Leuchtmittel derart angeordnet werden, dass die Verlängerung der Mittelachse der Sammellinse nicht durch den Mittelpunkt des Leuchtmittels verläuft. Als Vorzugsrichtung der Lichtabstrahlung ergibt sich bei einer derartigen Anordnung die Verbindungslinie zwischen dem Mittelpunkt des Leuchtmittels und dem Schnittpunkt der optischen Mittelachse der Sammellinse.

Durch die erfindungsgemäße Ablenkung des emittierten Lichts in Vorzugsrichtung ist es möglich, dass die Signalisierungseinrichtung Licht entweder nur in Richtung der Fahrerposition oder Licht nur in Richtung eines dahinter fahrenden Fahrzeugs bzw. eines seitlich fahrenden Fahrzeugs abstrahlt. Somit können Warnsignale nur dem Fahrer angezeigt werden, wohingegen der umgebende Verkehr durch diese Signale nicht irritiert wird. Hinweissignale dagegen, beispielsweise die Fahrtrichtungsanzeige, werden nur dem nachfolgenden und seitlichen Verkehr angezeigt, ohne dass der Fahrer durch diese Lichtsignale gestört wird.

Die zur Erkennung des Lichtsignals erforderliche Leuchtdichte hängt erfahrungsgemäß sehr stark von den Beleuchtungsverhältnissen in der Umgebung ab. Beispielsweise müssen die Signale bei Tag mit einer sehr viel höheren Leuchtdichte angezeigt werden als in der Nacht, damit sie trotz der hellen Umgebung noch ausreichend zuverlässig wahrgenommen werden. Erfindungsgemäße ist deshalb ein Sensor zur Messung der Beleuchtungsverhältnisse in der Umgebung vorhanden, damit die Leuchtdichte des von der Signalisierungseinrichtung abgestrahlten Lichts in Abhängigkeit von diesem Messergebnis verändert werden kann.

Welche Art von Leuchtmittel bei Realisierung des erfindungsgemäßen Rückspiegels eingesetzt wird, ist grundsätzlich beliebig. Besonders geeignet sind Licht emittierenden Halbleiterdioden, da diese elektronischen Bauteile nur eine sehr geringe Verlustleistung aufweisen und damit nur geringe Verlustwärmemengen abgeleitet werden müssen. Sollen unter einem Spiegelelement mehrere Signalisierungseinrichtungen angeordnet werden, so ist es zur Kostenersparnis sinnvoll, die zur Lichtablenkung erforderlichen verschiedenen Sammellinsen dadurch zu bilden, dass auf einer transparenten Platte mehrere linsenförmige oder kugelförmige Ausformungen vorgesehen sind. Diese Ausformungen sind dabei auf der Platte derart angeordnet, dass bei Befestigung der Platte auf dem darunter befindlichen Leuchtmittelträger jeweils ein Versatz zwischen Sammellinse und zugeordnetem Leuchtmittel entsteht, durch den die gewünschte Ablenkung des emittierten Lichts in Vorzugsrichtung bewirkt wird.

Um zu verhindern, dass unerwünschtes Streulicht durch das Spiegelelement hindurchtritt, kann zwischen dem Leuchtmittel und dem Spiegelelement ein undurchsichtiges Abschattelement, beispielsweise eine farbige Kunststoffplatte, angeordnet werden, das im Bereich der linsenförmigen Ausformungen Durchbrechungen zum Lichtdurchtritt aufweist.

Zur Bildung komplexer Warn- oder Hinweissignale können auf der Rückseite des Spiegelelements mehrere punktförmige Signalisierungseinrichtungen angeordnet sein. Dabei ist es insbesondere denkbar, dass die Signalisierungseinrichtungen entsprechend einer Punktmatrix angeordnet sind und durch geeignete Ansteuerung einzelner Lichtpunkte in der Punktmatrix frei definierte Signalformen realisiert werden.

Eine Ausführungsform der Erfindung ist in den Zeichnungen schematisch dargestellt und wird nachfolgend beispielhaft erläutert.

Es zeigen:
**Fig. 1** einen erfindungsgemäßen Außenrückspiegel in perspektivischer Ansicht aus dem Blickwinkel der Fahrerposition;
**Fig. 2** den Außenrückspiegel gemäß **Fig. 1** im Querschnitt.

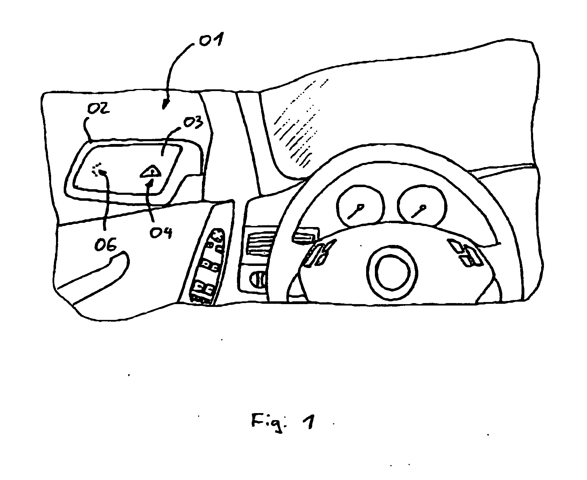

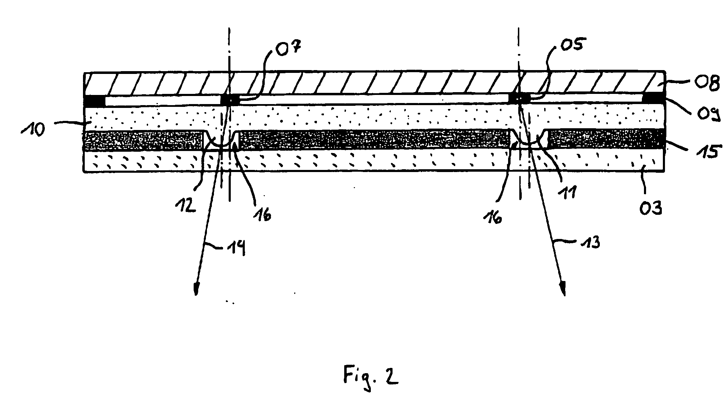

In **Fig. 1** ist ein Außenrückspiegel 01 mit einem Gehäuse 02 und einem Spiegelelement 03 aus dem Blickwinkel der Fahrerposition perspektivisch dargestellt. Das Spiegelelement 03 ist teiltransparent, so dass dem Fahrer ein dreieckförmiges Warnsignal 04 durch Ansteuerung von hinter dem Spiegelelement 04 angeordneten Leuchtmitteln 05 (siehe **Fig. 2**) angezeigt werden kann. Außerdem kann dem nachfolgenden Verkehr ein pfeilförmiges Hinweissignal 06 durch Betrieb von ebenfalls hinter dem Spiegelelement 03 angeordneten Leuchtmitteln 07 angezeigt werden, wobei das Hinweissignal 06 in **Fig. 1** lediglich punktiert angedeutet ist, da es aus dem Blickwinkel der Fahrerposition aufgrund des dazu ungeeigneten Betrachtungswinkels nicht erkannt werden kann. Diese richtungsabhängige Beleuchtungsstärke des Warnsignals 04 bzw. des Hinweissignals 06 soll nachfolgend anhand des Querschnitts in **Fig. 2** näher erläutert werden.

In **Fig. 2** sind die erfindungsrelevanten Bauteile des Außenrückspiegels 01 im Querschnitt dargestellt. Zum Verständnis der Erfindung nicht erforderliche Bauteile des Außenrückspiegels 01 sind nicht dargestellt.

Hinter dem teiltransparenten Spiegelelement 03 ist eine mit den Leuchtmitteln 05 und 07 bestückte Platine 08 befestigt. Als Leuchtmittel 05 und 06 kommen dabei Licht emittierende Halbleiterdioden zum Einsatz, die jeweils punktförmiges Licht emittieren, wobei die Kontur des Warnsignals 04 bzw. des Hinweissignals 06 durch entsprechend geeignete Anordnung mehrerer Leuchtmittel 05 bzw. Leuchtmittel 07 auf der Platine 08 realisiert ist. In **Fig. 2** ist von den das Warnsignal 04 bzw. das Hinweissignal 06 bildenden Leuchtmitteln 05 und 07 jeweils nur ein Leuchtmittel dargestellt.

Unter Verwendung von Abstandshaltern 09 ist auf der Platine 08 eine transparente Platte 10 befestigt, auf deren von den Leuchtmitteln 05 und 07 abgewandter Seite linsenförmige Ausformungen angeformt sind, die als Sammellinsen 11 und 12 dienen. Die Sammellinsen 11 und 12 sind dabei jeweils einem Leuchtmittel 05 bzw. 07 zugeordnet, wobei die optische Mittelachse der Sammellinsen 11 und 12 jeweils nicht durch den Mittelpunkt der Leuchtmittel 05 und 07 verläuft. Aufgrund dieses Versatzes zwischen Leuchtmittel 05 bzw. 07 zur jeweils zugeordneten Sammellinse 11 bzw. 12 wird erreicht, dass das von den Leuchtmitteln 05 bzw. 07 emittierte Licht in vorgegebene Vorzugsrichtungen 13 und 14 abgelenkt wird. Das bedeutet mit anderen Worten, dass das Maximum der Beleuchtungsstärke des Leuchtmittels 05 dann erreicht wird, wenn es aus einer Richtung betrachtet wird, die der Vorzugsrichtung 13 entspricht. Das Maximum der Beleuchtungsstärke bei Betrachtung des Leuchtmittels 07 wird erreicht, wenn die Betrachtungsrichtung mit der Vorzugsrichtung 14 übereinstimmt. Bei Betrachtung der Leuchtmittel 05 bzw. 07 aus anderen Richtungen kann das jeweilige Leuchtmittel 05 bzw. 07 nur noch sehr schwach oder überhaupt nicht mehr erkannt werden. Dies führt dazu, dass beispielsweise der nachfolgende Verkehr die mit den Leuchtmitteln 05 angezeigten Warnsignale nicht wahrnimmt, obwohl der Fahrer das entsprechende Warnsignal sehr gut erkennt. Umgekehrt werden die von den Leuchtmitteln 07 angezeigten Hinweissignale nur vom nachfolgenden Verkehr wahrgenommen, wohingegen der Fahrer diese Signale nicht sieht.

Um unerwünschtes Streulicht zu vermeiden, ist zwischen der transparenten Platte 10 und dem Spiegelelement 03 ein Abschattelement 15 vorgesehen, das ortskomplementär zu den Sammellinsen 11 und 12 Durchbrechungen 16 aufweist.

## Patentansprüche

1. Rückspiegel (01) für ein Kraftfahrzeug mit einem teiltransparenten Spiegelelement (03) zur Beobachtung des nachfolgenden Verkehrs, wobei auf der Rückseite des Spiegelelements (03) zumindest eine Signalisierungseinrichtung mit einem Licht emittierenden Leuchtmittel (05, 07) vorgesehen ist, und wobei das Licht der Signalisierungseinrichtung unter einem bestimmten Abstrahlwinkel in eine Vorzugsrichtung (13, 14) abgestrahlt wird, so dass die Beleuchtungsstärke an der Vorderseite des Spiegelelements (03) vom Betrachtungswinkel relativ zur Vorzugsrichtung (13, 14) abhängt, und wobei zwischen dem Leuchtmittel (05, 07) und dem Spiegelelement (03) eine optische Sammellinse (11, 12) angeordnet ist, und wobei die Sammellinse (11, 12) rotationssymmetrisch zu einer optischen Mittelachse gestaltet ist und eine linsenförmige oder kuppelförmige Außenseite aufweist,
**dadurch gekennzeichnet,**
**dass** an der Signalisierungseinrichtung zumindest zwei Leuchtmittel (05, 07) mit jeweils einer zugeordneten Sammellinse (11, 12) vorgesehen sind, wobei die Verlängerung der optischen Mittelachsen der Sammellinsen (11, 12) nicht durch den Mittelpunkt der zugeordneten Leuchtmittel (05, 07) verläuft und **dadurch** die Lichtsignale der Leuchtmittel (05, 07) gesammelt und in Richtung unterschiedlicher Vorzugsrichtungen (13, 14) abgelenkt werden, wobei durch den Versatz zwischen dem ersten Leuchtmittel (05) und zugeordneter Sammellinse (11) die Signalisierungseinrichtung ein als Warnsignal dienendes Licht in eine erste Vorzugsrichtung (13) abstrahlt, so dass bei Betrachtung der Vorderseite des Spiegelelements (03) von der Fahrerposition aus eine maximale Beleuchtungsstärke erzielt wird, und wobei durch den Versatz zwischen dem zweiten Leuchtmittel (07) und zugeordneter Sammellinse (12) die Signalisierungseinrichtung ein als Hinweissignal dienendes Licht in eine zweite Vorzugsrichtung (14) abstrahlt, so dass bei Betrachtung der Vorderseite des Spiegelelements (03) von einer Position hinter dem Fahrzeug und/oder seitlich des Fahrzeugs eine maximale Beleuchtungsstärke erzielt wird, und wobei die Leuchtdichte des von der Signalisierungseinrichtung abgestrahlten Lichts in Abhängigkeit vom Messergebnis eines Sensors veränderbar ist, mit dem die Beleuchtungsverhältnisse im Umgebungsbereich messbar sind.

2. Rückspiegel nach Anspruch 1,
**dadurch gekennzeichnet,**
**dass** das Licht emittierende Leuchtmittel (05, 07) in der Art eines Halbleiterbauteils, insbesondere in der Art einer Licht emittierenden Halbleiterdiode, ausgebildet ist.

3. Rückspiegel nach Anspruch 1 oder 2,
**dadurch gekennzeichnet,**
**dass** mehrere Sammellinsen (11, 12) durch insbesondere linsenförmige oder kuppelförmige Ausformung auf der Außenseite einer transparenten Platte (10) gebildet sind.

4. Rückspiegel nach einem der Ansprüche 1 bis 3,
**dadurch gekennzeichnet,**
**dass** zwischen dem Leuchtmittel (05, 07) und dem Spiegelelement (03) ein undurchsichtiges Abschattelement (15) angeordnet ist, das im Bereich der Sammellinsen (11, 12) Durchbrechungen (16) aufweist.

5. Rückspiegel nach einem der Ansprüche 1 bis 4,
**dadurch gekennzeichnet,**
**dass** mehrere im Wesentlichen punktförmige Leuchtmittel (05, 07) entlang der Konturen eines Warn- und/oder Hinweissignals (04, 06) auf der Rückseite des Spiegelelements (03) angeordnet sind.

6. Rückspiegel nach einem der Ansprüche 1 bis 5,
**dadurch gekennzeichnet,**
**dass** das Warn- und/oder Hinweissignal (04, 06) in der Gestalt eines Pfeils und/oder Dreiecks und/oder Strichs ausgebildet ist.

7. Rückspiegel nach einem der Ansprüche 1 bis 6,
**dadurch gekennzeichnet,**
**dass** die Leuchtdichte des von der Signalisierungseinrichtung abgestrahlten Lichts bei Tag im Bereich von oberhalb 1500 cd/qm liegt.

8. Rückspiegel nach einem der Ansprüche 1 bis 7,
**dadurch gekennzeichnet,**
**dass** die Leuchtdichte des von der Signalisierungseinrichtung abgestrahlten Lichts bei Nacht im Bereich von 100 bis 300 cd/qm liegt..

9. Rückspiegel nach einem der Ansprüche 1 bis 8,
**dadurch gekennzeichnet,**
**dass** der Rückspiegel in der Art eines Außenrückspiegels (01) ausgebildet ist.

10. Rückspiegel nach einem der Ansprüche 1 bis 8,
**dadurch gekennzeichnet,**
**dass** der Rückspiegel in der Art eines Innenrückspiegels ausgebildet ist.

## Claims

1. A rear-view mirror (01) for a motor vehicle with a partly transparent mirror element (03) for observing the traffic behind, wherein at least one signalling mechanism with light-emitting lighting means (05, 07) is provided on the rear side of the mirror element (03), and wherein the light of the signalling mechanism is radiated at a specific angle of radiation in a predominant direction (13, 14), so that the lighting strength on the front side of the mirror element (03) depends on the viewing angle relative to the predominant direction (13, 14), and wherein an optical convergent lens (11, 12), is arranged between the lighting means (05, 07) and the mirror element (03), and wherein the convergent lens (11, 12) is configured rotationally symmetrically to an optical central axis and has a lenticular or domed outside
**characterized in that**
arranged on the signalling mechanism are at least two lighting means (05, 07), each having an assigned convergent lens (11, 12), wherein the extension of the optical central axes of the convergent lenses (11, 12) does not run through the centre point of the assigned lighting means (05, 07) and thereby the light signals of the lighting means (05, 07) are collected and deflected in the direction of different predominant directions (13, 14), wherein due to the offset between the first lighting means (05) and the assigned convergent lens (11) the signalling mechanism radiates light serving as a warning signal in a first predominant direction (13), so that maximum illumination strength is achieved when the front side of the mirror element (03) is viewed from the driver's position, and wherein due to the offset between the second lighting means (07) and the assigned convergent lens (12) the signalling mechanism radiates light serving as a reference signal in a second predominant direction (14), so that maximum illumination strength is achieved when the front side of the mirror element (03) is viewed from a position behind the vehicle and/or to the side of the vehicle, and wherein the brightness of the light radiated by the signalling mechanism can be changed depending on the measuring result of a sensor, with which the lighting ratios can be measured in the surrounding area.

2. The rear-view mirror as claimed in Claim 1,
**characterized in that**
the light-emitting lighting means (05, 07) is designed as a semiconductor component, in particular as a light-emitting semiconductor diode.

3. The rear-view mirror as claimed in any one of Claims 1 or 2,
**characterized in that**
several convergent lenses (11, 12) are formed by in particular lenticular or domed shaping on the outside of a transparent plate (10).

4. The rear-view mirror as claimed in any one of Claims 1 to 3,
**characterized in that**
arranged between the lighting means (05, 07) and the mirror element (03) is an opaque masking element (15), which has openings (16) in the region of the convergent lenses (11, 12).

5. The rear-view mirror as claimed in any one of Claims 1 to 4,
**characterized in that**
several substantially point lighting means (05, 07) are arranged along the contours of a warning and/or reference signal (04, 06) on the rear side of the mirror element (03).

6. The rear-view mirror as claimed in any one of Claims 1 to 5,
**characterized in that**
the warning and/or reference signal (04, 06) is in the form of an arrow and/or triangle and/or stroke.

7. The rear-view mirror as claimed in any one of Claims 1 to 6,
**characterized in that**
the brightness of the light radiated by the signalling mechanism is in the region of over 1500 cd/m² by day.

8. The rear-view mirror as claimed in any one of Claims 1 to 7,
**characterized in that**
the brightness of the light radiated by the signalling mechanism is in the region of 100 to 300 cd/m² by night.

9. The rear-view mirror as claimed in any one of Claims 1 to 8,
**characterized in that**
the rear-view mirror is designed as an outside rear-view mirror (01).

10. The rear-view mirror as claimed in any one of Claims 1 to 8,
**characterized in that**
the rear-view mirror is designed as an internal rear-view mirror.

## Revendications

1. Rétroviseur (01) pour un véhicule automobile, comprenant un élément de miroir (03) partiellement transparent pour l'observation du trafic en arrière, dans lequel au moins un dispositif de signalisation ayant un moyen lumineux émetteur de lumière est prévu sur le côté postérieur de l'élément de miroir, dans lequel la lumière du dispositif de signalisation est émise sous un certain angle de départ dans une direction prédominante (13, 14), de sorte que l'intensité lumineuse du côté antérieur de l'élément de miroir (03) dépende de l'angle d'observation relatif à la direction prédominante (13, 14), et dans lequel une lentille convergente optique (11, 12) est agencée entre le moyen lumineux (05, 07) et l'élément de miroir (03), la lentille convergente (11, 12) étant façonnée de manière symétrique en rotation par rapport à un axe optique central et présentant une face extérieure en forme de lentille ou en forme de dôme,
**caractérisé en ce qu'**
au moins deux moyens lumineux (05, 07) ayant chacun une lentille convergente (11, 12) associée sont prévus au dispositif de signalisation, l'extension des axes optiques centraux des lentilles convergentes (11, 12) ne s'étendant pas par le centre des moyens lumineux (05, 07) associés, les signaux lumineux des moyens lumineux (05, 07) par conséquent étant collectés et déviés vers différentes directions prédominantes (13, 14), le décalage entre le premier moyen lumineux (05) et la lentille convergente (11) associée provoquant le dispositif de signalisation à émettre une lumière servant de signal d'avertissement dans une première direction prédominante (13), de telle manière que lors de l'observation du côté antérieur de l'élément de miroir (03), à partir de la position du conducteur, une intensité lumineuse maximale est obtenue, et le décalage entre le deuxième moyen lumineux (07) et la lentille convergente (12) associée provoquant le dispositif de signalisation à émettre une lumière servant de signal d'indication dans une seconde direction prédominante (14), de telle manière que lors de l'observation du côté antérieur de l'élément de miroir (03), à partir d'une position derrière le véhicule et/ou une position à côté du véhicule, une intensité lumineuse maximale est obtenue, et la luminance de la lumière émise par le dispositif de signalisation étant variable en fonction du résultat de mesure d'un capteur avec lequel les conditions d'illumination dans la zone ambiante peuvent être mesurées.

2. Rétroviseur selon la revendication 1,
**caractérisé en ce que**
le moyen lumineux (05, 07) émetteur de lumière est façonné en forme d'un composant semi-conducteur, en particulier en forme d'une diode à semi-conducteurs émettrice de lumière.

3. Rétroviseur selon la revendication 1 ou 2,
**caractérisé en ce que**
plusieurs lentilles convergentes (11, 12) sont formées sur la face extérieure d'une plaque transparente (10), en particulier en tant qu'une structure en forme de lentille ou en forme de dôme.

4. Rétroviseur selon l'une quelconque des revendications 1 à 3,
**caractérisé en ce qu'**
un élément de masquage (15) opaque présentant des ouvertures (16) dans la zone des lentilles convergentes (11, 12) est agencé entre l'élément lumineux (05, 07) et l'élément de miroir (03).

5. Rétroviseur selon l'une quelconque des revendications 1 à 4,
**caractérisé en ce que**
plusieurs moyens lumineux (05, 07) essentiellement en forme de point s'étendent le long des contours d'un signal d'avertissement et/ou d'un signal d'indication (04, 06) sur le côté postérieur de l'élément de miroir (03).

6. Rétroviseur selon l'une quelconque des revendications 1 à 5,
**caractérisé en ce que**
le signal d'avertissement et/ou le signal d'indication (04, 06) est/sont façonné/s en forme d'une sagette et/ou en forme d'un triangle et/ou en forme d'un trait.

7. Rétroviseur selon l'une quelconque des revendications 1 à 6,
**caractérisé en ce que**
la luminance de la lumière émise par le dispositif de signalisation de jour se trouve dans une plage supérieure à 1500 cd/m²

8. Rétroviseur selon l'une quelconque des revendications 1 à 7,
**caractérisé en ce que**
la luminance de la lumière émise par le dispositif de signalisation de nuit se trouve dans une plage de 100 à 300 cd/m².

9. Rétroviseur selon l'une quelconque des revendications 1 à 8,
**caractérisé en ce que**
le rétroviseur est conçu en forme d'un rétroviseur extérieur (01).

10. Rétroviseur selon l'une quelconque des revendications 1 à 8,
**caractérisé en ce que**
le rétroviseur est conçu en forme d'un rétroviseur intérieur.
